# EUROPEAN PATENT APPLICATION

(11) **EP 4 848 539 A1**
(43) Date of publication of application: **02.12.2026**
(21) Application number: 26181299.4
(22) Date of filing: 27.05.2026
(51) Int. Cl.: H02K 1/14, H02K 7/14, H02K 15/035, H02K 15/121, H02K 1/32, H02K 1/278, H02K 1/2726, H02K 15/12, H02K 15/022

(54) **BRUSHLESS MOTORS, POWER TOOLS WITH BRUSHLESS MOTORS AND METHODS OF MANUFACTURING THE SAME**

(30) Priority: 28.05.2025 US 202563813387 P
(71) Applicant: Black & Decker, Inc., New Britain, CT 06053 (US)
(72) Inventor: WANG, Xiaojie, Suzhou (CN); ZHENG, Tong, Suzhou City (CN); SHEN, Pengcheng, Suzhou City (CN); LIU, Fulong, Suzhou (CN); GU, Yeli, Suzhou (CN)
(74) Representative: SBD IPAdmin

(57) **Abstract**

A motor may include a stator core that includes an outer ring and a plurality of discrete stator teeth coupled to an inner surface of the outer ring and extending inward in a substantially radial direction; a plurality of conductive windings disposed on the plurality of stator teeth; and a frame coupled with inner tips of the plurality of stator teeth to define an inner annular body around a rotor disposed therein.

## Description

This document relates, generally, to power tools, and in particular, to power tools with brushless motors, to brushless motors, and to methods of manufacturing the same. Brushless motors include a stator and a rotor rotatably disposed in the stator. The rotor may include permanent magnets. The stator may include a stator core and stator teeth and a series of stator windings wound on the stator teeth.

A first aspect of the invention provides a motor according to Claim 1 of the appended claims.

Preferred, and other optional, features of the invention are defined and described in the dependent claims.

It is expressly to be understood that any feature of any aspect, embodiment, or implementation, of the invention and/or the disclosure may be a feature of any other aspect, embodiment, or implementation, of the invention and/or the disclosure.

In some aspects, the techniques described herein relate to a stator, including: an outer ring; a plurality of stator teeth discretely formed from the outer ring and coupled to an inner surface thereof and extending in a radially inward direction; a plurality of conductive windings disposed on the plurality of stator teeth; and a frame coupled with inner portions of the plurality of stator teeth to form an inner wall that defines an inner volume configured for a rotor to be disposed therein.

In some aspects, the techniques described herein relate to a stator, wherein the frame extends between the inner portions of adjacent ones of the plurality of stator teeth.

In some aspects, the techniques described herein relate to a stator, wherein the frame is an injection molded frame that provides a central structure that supports the plurality of stator teeth and defines a portion of the inner wall.

In some aspects, the techniques described herein relate to a stator, wherein the frame is molded around at least a portion of one or more of the plurality of stator teeth to provide insulation between at least one of the plurality of conductive windings and a corresponding one of the plurality of stator teeth.

In some aspects, the techniques described herein relate to a stator, wherein the frame includes a bearing housing for supporting a bearing for a rotor shaft.

In some aspects, the techniques described herein relate to a stator, wherein the frame includes terminal support members for supporting a terminal, at least one of the plurality of conductive windings electrically connected to the terminal.

In some aspects, the techniques described herein relate to a stator, wherein the frame includes airflow openings adjacent the terminal support members for passage of cooling air flow into the inner volume.

In some aspects, the techniques described herein relate to a stator, wherein the outer ring includes a plurality of coupling features that have a shape that is complementary to a shape of an outer portion of corresponding ones of the plurality of stator teeth, wherein the plurality of stator teeth are slideably mounted within the outer ring in engagement with corresponding ones of the plurality of coupling features and fixed rotationally and radially therein by the plurality of coupling features.

In some aspects, the techniques described herein relate to a stator, wherein at least one of the plurality of coupling features is at least one of a recess or a protrusion on an inner surface of the outer ring.

In some aspects, the techniques described herein relate to a motor, including: a stator such as a stator as described herein; and a rotor rotationally disposed in the inner volume.

In some aspects, the techniques described herein relate to a motor, further including a rotor shaft coupled to the rotor and a fan coupled to the rotor shaft adjacent the rotor. In some aspects, the techniques described herein relate to an apparatus, including: at least one motor, such as at least one motor as described herein.

In some aspects, the techniques described herein relate to a method of manufacturing a stator, including: injecting an injection molding material to form a frame on inner bodies of a plurality of stator teeth, wherein the frame cooperates with the inner bodies of the plurality of stator teeth to form an inner wall defining an inner volume that is configured for a rotor to be disposed therein; winding a plurality of conductive windings on corresponding ones of the plurality of stator teeth after injecting the injection molding material; and mounting an outer ring in engagement with outer bodies of the plurality of stator teeth.

In some aspects, the techniques described herein relate to a method, wherein injecting the injection molding material includes forming a bearing housing for supporting a bearing of a rotor shaft therein.

In some aspects, the techniques described herein relate to a method, wherein injecting the injection molding material includes applying injection molding material at least partially to at least one of the plurality of stator teeth to provide electrical insulation between the plurality of conductive windings and corresponding respective ones of the plurality of stator teeth.

In some aspects, the techniques described herein relate to a rotor, including: a rotor core that includes an outer surface that includes a first tooth and a second tooth, the first tooth and the second tooth spaced circumferentially and defining a slot therebetween; and an injection-molded magnet layer formed on the rotor core and injected into the slot to form a magnet tooth that interlocks with the first tooth and the second tooth.

In some aspects, the techniques described herein relate to a rotor, wherein the first tooth includes a radial coupling feature that secures the magnet layer to the rotor core in a radial direction.

In some aspects, the techniques described herein relate to a rotor, wherein the radial coupling feature includes an undercut cross-sectional shape of the first tooth.

In some aspects, the techniques described herein relate to a rotor, wherein the injection-molded magnet layer is magnetized after forming the injection-molded magnet layer on the rotor core.

In some aspects, the techniques described herein relate to a rotor, including: a rotor core that includes a first flange and a second flange spaced to form a slot therebetween; a first surface mounted magnet disposed on the first flange and a second surface mounted magnet disposed on the second flange; and a key positioned in the slot that secures the first magnet and the second magnet to the rotor core.

In some aspects, the techniques described herein relate to a rotor, wherein the key is formed by injecting an injection molding material into the slot.

In some aspects, the techniques described herein relate to a rotor, further including an end plate positioned on an axial end of the rotor for securing the first magnet and the second magnet to the rotor core in an axial direction, wherein the key is coupled to and extends from the end plate.

In some aspects, the techniques described herein relate to a rotor, wherein: the rotor core includes an inner annular portion; the first flange and the second flange are spaced radially from the inner annular portion; and the rotor includes an airflow passage that extends along a length of the rotor and is defined at least in part by an outer surface of the inner annular portion and the key.

In some aspects, the techniques described herein relate to a motor, including: a stator; and a rotor, such as a rotor as described herein, rotationally disposed in the stator.

In some aspects, the techniques described herein relate to a power tool including: a housing including a battery receiving portion that receives a battery pack, a handle that accommodates a control unit, and a motor housing; and a motor disposed within the motor housing, wherein the motor includes a stator and a rotor, wherein the stator may be as described herein, and/or the rotor may be as described herein.

Examples of aspects, embodiments and implementations are shown in the figures, of which:
FIG. 1A is a cross-sectional side view of an example power tool.
FIGS. 1B and 1C are a perspective view and a side view, respectively, of a motor assembly of the example power tool of FIG. 1A.
FIG. 1D is a perspective cross-sectional view of the motor assembly of FIGS. 1B and 1C.
FIGS. 1E-1H are a top perspective view, a side view, a bottom perspective view, and a cross-sectional end view respectively, of a stator assembly of the example power tool of FIG. 1A.
FIG. 1I is a top perspective view of an outer ring of the stator assembly of FIG. 1E.
FIGS. 1J and 1K are a top perspective view and a bottom perspective view, respectively, of an inner portion of the stator assembly of FIG. 1E.
FIG. 1L is a top perspective view of a stator tooth lamination of the example stator assembly of FIG. 1E.
FIG. 1M is a top perspective view of a stator tooth of the example stator assembly of FIG. 1E.
FIG. 1N is a top perspective view of a plurality of stator teeth of the example stator assembly of FIG. 1E.
FIG. 2A is a top perspective view of an inner portion of an example stator assembly.
FIG. 2B is a cross-sectional end view of an example stator assembly including the example inner portion of FIG. 2A.
FIGS. 3A and 3B are a perspective view and an end view, respectively, of an example rotor.
FIG. 4A is a perspective view of an example rotor.
FIG. 4B is a perspective view of a magnet retainer of the rotor of FIG. 4A.
FIG. 4C is a perspective view of a rotor core of the rotor of FIG. 4A.
FIG. 4D is a cross-sectional end view of the rotor of FIG. 4A.
FIG. 4E is a perspective view of a plurality of magnets and the rotor core of the rotor of FIG. 4A.

Power-driven tools with brushless motors can provide a relatively high power density and electrical efficiency while being lightweight and compact. Motors of the present disclosure may provide increased power density and efficiency which can reduce the weight and improve the performance of the power tool. In some examples, motors of the present disclosure include inner-rotor motors with stator cores with segmented stator teeth that are assembled to an outer ring to form the stator core after winding. This can improve manufacturability and increase a slot fill of the stator. In some examples, motors of the present disclosure may include stator cores that include a plurality of stator teeth with inner portions, such as tooth tips, that are joined by an injection mold material that structurally supports the stator teeth. In some examples, the injection mold material may further cover various surfaces of the stator teeth and electrically insulate the stator teeth from the stator windings. Aspects of the present disclosure may also include surface mounted permanent magnet rotors that have exposed magnets in direct contact with the airgap and that do not require any glues or adhesives. In some examples, rotors of the present disclosure include an outer layer of an injection molded magnet that is formed on a rotor core that includes coupling features for securely coupling the injection-molded magnet layer to the rotor core. In some examples, rotors of the present disclosure include rotor cores and surface mounted magnets that are coupled by interlocking keys that are formed or slidably disposed at an interface between the magnets and the rotor core.

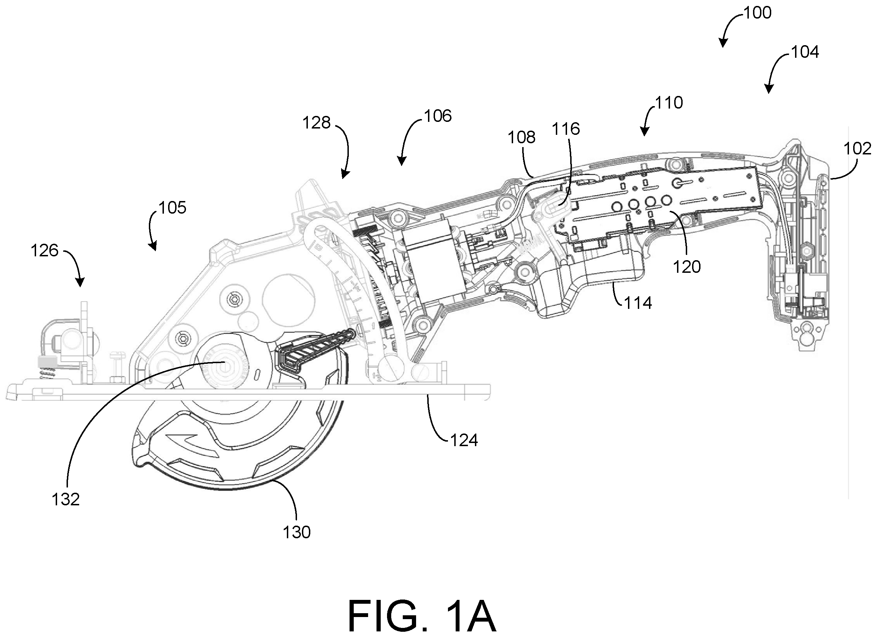

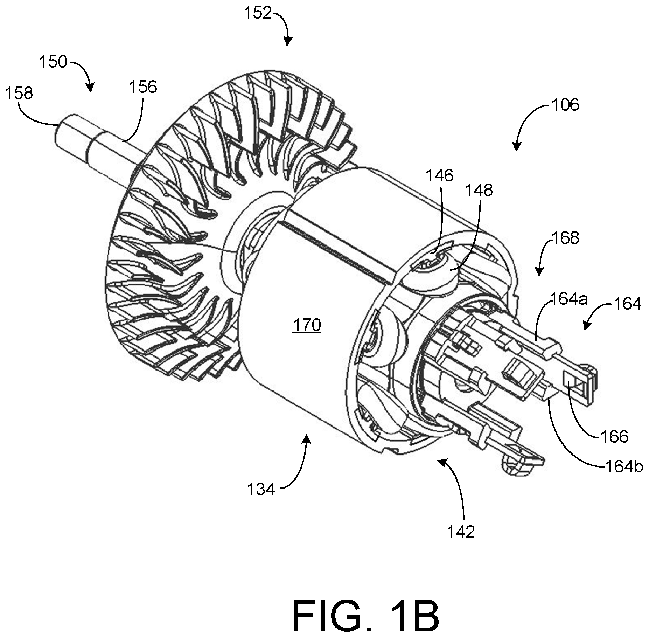

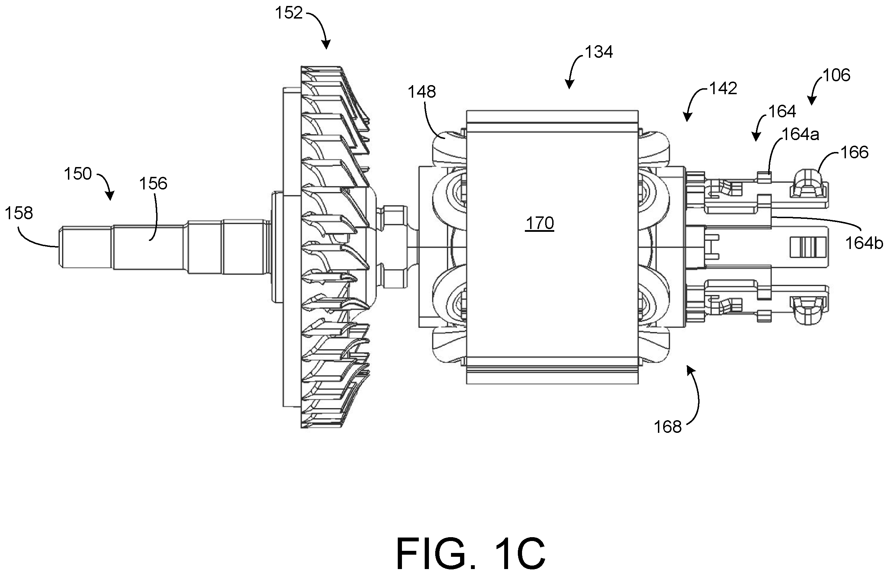

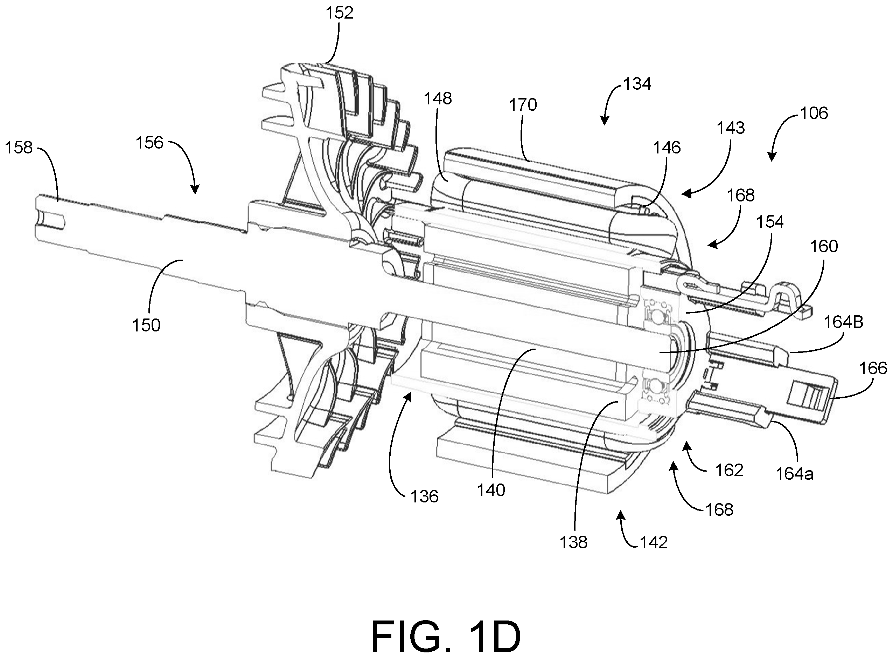

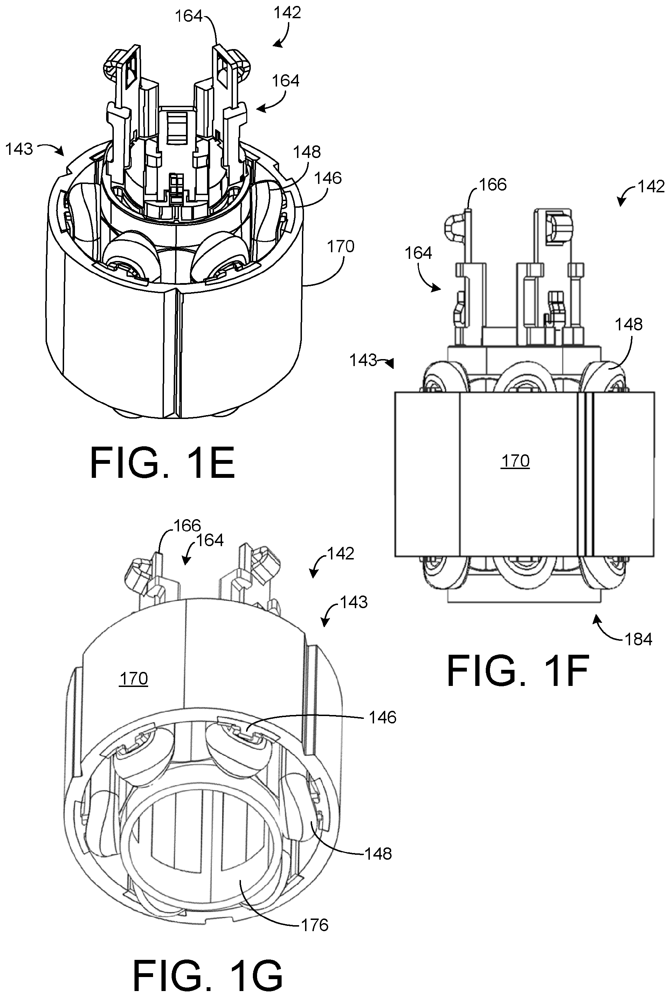

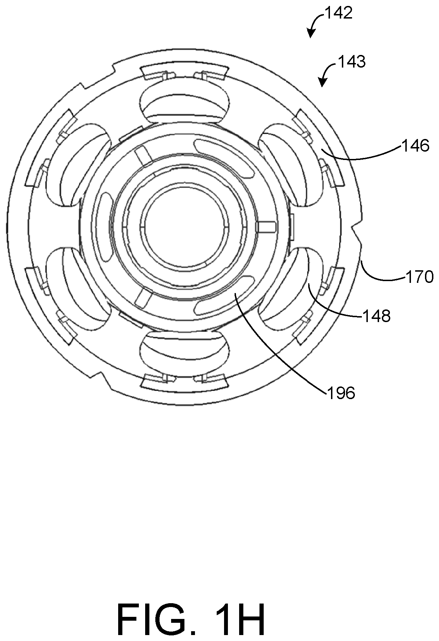

An example power tool 100, in the form of a battery-powered circular saw, is shown in FIG. 1A. The example power tool 100 is a cordless circular saw powered by a removable power storage device, or battery pack (not illustrated) that is removably coupled to a battery receptacle 102 located in a first end portion 104 of the power tool 100. In particular, FIG. 1A is a cross-sectional side view of the example power tool 100 with an output end portion of a housing 108 of the power tool 100 removed. FIGS. 1B and 1C are a perspective view and a side view, respectively, of a motor assembly 106 of the example power tool 100. FIG. 1D is a perspective cross-sectional view of the motor assembly 106.

Referring to FIGS. 1A-1D, the example power tool 100 may be a battery-powered circular saw and includes the housing 108 that includes a first handle 110 for holding and controlling the power tool 100. The power tool 100 may also include a second handle (not illustrated) coupled to an output end portion 105 of the housing 108 which is omitted from FIG. 1A. The first handle 110 includes a trigger 114 for selectively driving an output spindle 132 and a rotary saw blade (not illustrated) coupled to the output spindle 132. The example power tool 100 may also include a control button 116, which may be used, for example, for locking and unlocking the output spindle 132 and blade. In the illustrated example, the power tool 100 is battery powered and includes the battery receptacle 102 for releasably coupling a battery pack to the housing 108. The battery pack powers a motor assembly 106 which drives the output spindle 132 and blade.

The power tool 100 may also include a drive system which includes the motor assembly 106 and a transmission (not illustrated) for coupling the motor assembly 106 to the output spindle 132. The trigger 114 may be operably connected to a control module 120 disposed in the first handle 110 of the housing 108 for controlling the operation of the motor assembly 106. The control module 120 may be electrically coupled to the motor assembly 106, for example, via a power module (not illustrated), which may be located adjacent the motor assembly 106. In an example, the control module 120 may control a switching operation of a series of power switches disposed in the power module to regulate a supply of power from the battery pack to the motor assembly 106. In an example the control module 120 controls the motor assembly 106 according to an input from the trigger 114, which may include controlling a switching operation of the power module.

The power tool 100 may also include a fixed upper blade guard, e.g., in the output end portion 105 of the housing 108 (not illustrated) and a retractable lower blade guard 130. The fixed upper blade guard may also include a dust port (not illustrated) for sawdust collection. The example power tool 100 may also include a footplate 124 to provide a support surface for the power tool 100 during use. The power tool 100 may include an angle adjustment assembly 126 that allows the footplate 124 to selectively pivot with respect to the housing 108 for adjusting an angle of the blade with respect to the footplate 124 for selectively performing an orthogonal cut or a bevel cut. The power tool 100 may also include a depth adjustment assembly 128 that allows the footplate 124 to pivot with respect to the housing 108 for adjusting a depth of the blade with respect to the footplate 124.

The power tool 100 is illustrated by way of example. In other examples, motors and motor assemblies of the present disclosure may be incorporated into any power tool or other apparatus that includes an electric drive system, such as circular saws, track saws, plunge saws, drills, impact drivers, impact wrenches, grinders, landscaping equipment (lawnmowers, string trimmers, blowers, etc.), household appliances, toys, personal care products, and the like, which may be battery powered or powered via an electrical power cord and an external power source.

FIGS. 1B and 1C are a perspective view and a side view, respectively, of the motor assembly 106 of the example power tool 100. FIG. 1D is a perspective cross-sectional view of the motor assembly 106.

Referring to FIGS. 1B-1D, in the illustrated example, the motor assembly 106 includes a motor 134, which may be a brushless inner-rotor permanent magnet motor. In an example, the motor 134 is a brushless direct-current (BLDC) motor. In an example, motors of the present disclosure include brushless AC motors. In an example, motor 134 includes a stator assembly 142 and an inner rotor 136 rotatably disposed within a stator bore of the stator assembly 142. The rotor 136 may be coupled to a rotor shaft 150 supported by a bearing 154. The rotor 136 includes magnets 138, which may be surface-mount magnets coupled to a rotor core 140. In an example, rotors of the present disclosure include embedded magnets embedded in a rotor core. The stator assembly 142 may include a stator core 143 that includes an outer ring 170, or stator yoke, or magnetic core back, having a substantially cylindrical body forming an outer circumferential surface of the stator assembly 142. The stator core 143 may also include a series of teeth 146 projecting radially inward from the outer ring 170. In an example, the stator core 143 may have a two-part construction in which the outer ring 170 is removably coupled, e.g., slidably coupled, to the teeth 146.

A series of conductive windings 148 are wound around the stator teeth 146 to define, e.g., three phases connected in, e.g., a wye or a delta configuration. The stator assembly 142 may also include a frame 184, which may be an injection molded insulating frame. In an example the frame 184 includes an inner annular portion that couples the teeth 146 together. For example, the frame 184 may be coupled to inner portions, or inner sides, or first sides or inner tips of the teeth 146. The conductive windings 148 of the stator assembly 142 may be sequentially energized to magnetically couple to the rotor magnets 138 to thereby rotationally drive the rotor 136 relative to the stator assembly 142. The stator assembly 142 may also include terminal support members 164 that support terminals 166 for electrically coupling to the conductive windings 148. In an example the terminal support members 164 are coupled to a second end 168 of the frame 184 and positioned in pairs that include a first terminal support member 164a and a second terminal support member 164b. In an example the first terminal support members 164a and the second terminal support members 164b may each include a slot formed on an inner surface thereof for sliding engagement with a corresponding terminal 166.

In the illustrated example, the rotor shaft 150 includes a first end 158, or output end, configured to be coupled to a transmission, and a second end 160. The second end 160 may be rotationally supported by the bearing 154, which may be disposed in a bearing housing 162. In an example the bearing housing 162 may be coupled to the second end 168 of the frame 184. In an example the motor assembly 106 is air-cooled and includes a fan 152, e.g., a radial or centrifugal fan, coupled to the rotor shaft 150. In an example the fan 152 is coupled to the rotor shaft 150 at a location between the first end 158 of the rotor shaft 150 and the motor 134, for drawing ambient air through the motor assembly 106 during operation of the motor 134. The rotor shaft 150 may also include a bearing portion 156 located, for example, between the first end 158 of the rotor shaft 150 and the fan 152 for coupling to, or forming a part of, a bearing (not illustrated) for supporting the first end 158 of the rotor shaft 150.

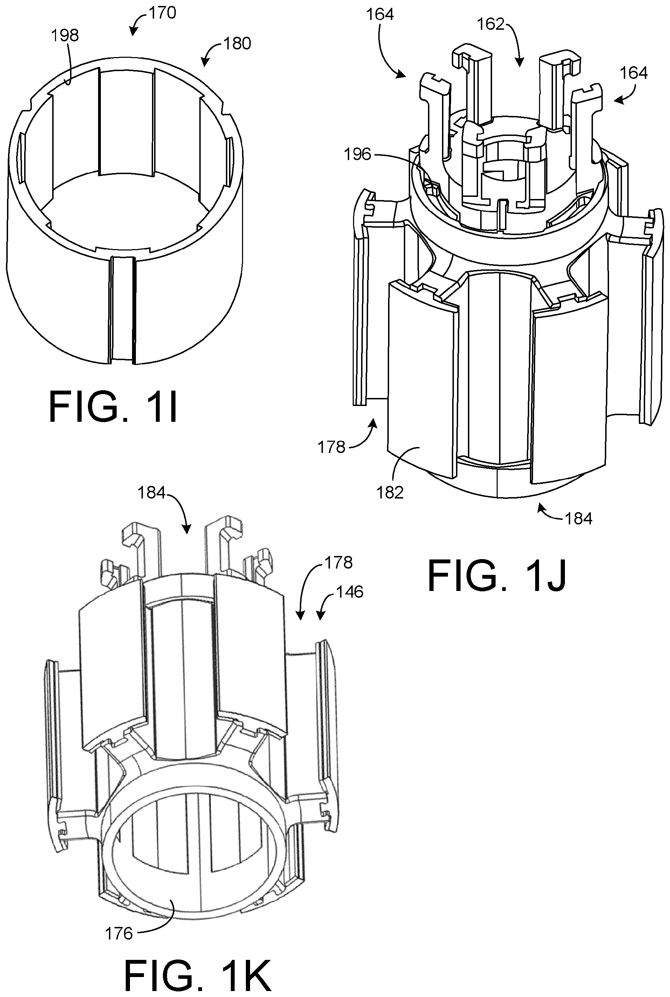

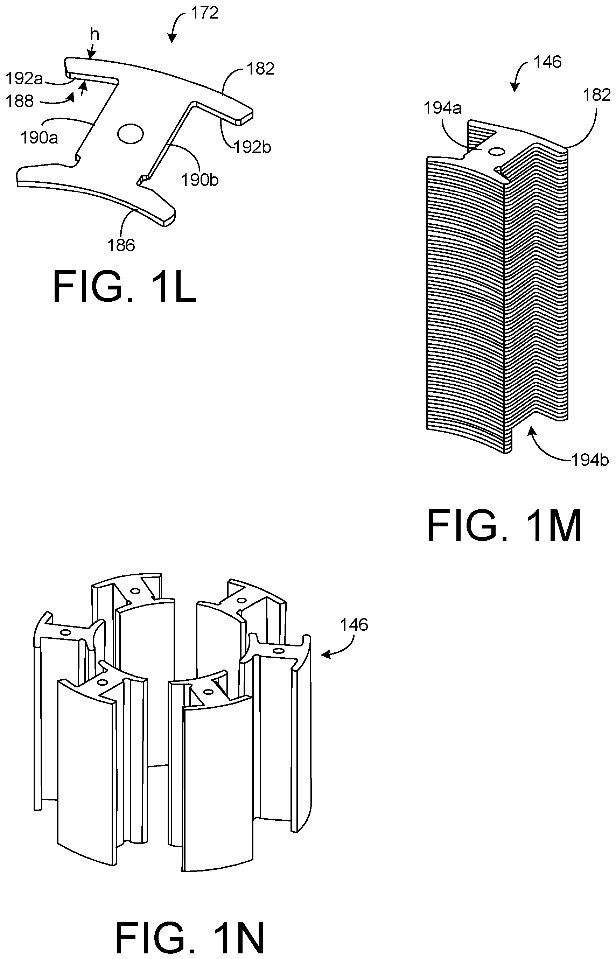

FIGS. 1E-1M illustrate the stator assembly 142 and components of the stator assembly 142. FIGS. 1E-1H are a top perspective view, a side view, a bottom perspective view, and a cross-sectional end view, respectively, of the stator assembly 142. FIG. 1I is a top perspective view of the outer ring 170 of the stator core 143 of the stator assembly 142. FIGS. 1J and 1K are a top perspective view and a bottom perspective view, respectively, of the teeth 146 and frame 184 of the stator assembly 142. FIG. 1L is a top perspective view of a stator tooth lamination 172. FIG. 1M is a top perspective view of a stator tooth 146, and FIG. 1M is a top perspective view of a plurality of the stator teeth 146.

Referring to FIGS. 1E-1N. The stator assembly 142 may include the stator core 143, which may include a series of stator teeth 146 projecting radially inward from the outer ring 170. The conductive windings 148 may be wound around corresponding stator teeth 146 to define electrical phases of the stator assembly 142. In an example, the stator assembly 142 includes an inner wall 176 having a cylindrical shape that defines an inner volume or stator bore in which a rotor, such as the rotor 136, may be rotatably disposed. The plurality of teeth 146 may extend radially outward with respect to the inner wall 176 and may be oriented axially such that a longitudinal axis of a corresponding tooth 146 is substantially parallel to a longitudinal axis of the stator core 143, or parallel to a rotational axis of the rotor 136 when disposed in the stator core 143. The teeth 146 may be spaced circumferentially around a circumference of the stator core 143 and define slots 178 extending between adjacent teeth 146.

As shown in, e.g., FIGS. 1I and 1J, in an example, the stator core 143 may have a two-part construction, including the outer ring 170 and the stator teeth 146 extending radially inward from the outer ring 170 and supported by the frame 184. The outer ring 170 may be configured to connect and support the plurality of stator teeth 146 and may be configured to provide a path for a magnetic flux. In an example, the outer ring 170 is slidably disposed on or over the teeth 146 and may be configured to be coupled to the teeth 146 to form the stator core 143 after the conductive windings 148 have been wound on the teeth 146.

The stator teeth 146 and frame 184, therefore, form exterior-facing slots 178 during a winding process of the stator windings 148 and prior to the assembly of the stator core 143. The assembly that includes the teeth 146 and frame 184 may be referred to as outside-slotted or exterior-slotted portion of the stator assembly 142. This is in contrast to conventional stator cores including inner-extending stator teeth that are inside slotted, i.e., in which an opening in the slots extending between stator teeth face radially inward towards the inner volume or stator bore where the inner rotor is located. The conductive windings 148 may be formed by wrapping conductive wire, such as an insulated copper or aluminum wire, multiple times around a corresponding tooth 146 to form a portion of one phase of the stator assembly 142. In an example, the conductive windings 148 are formed after the frame 184 is formed and the teeth 146 are coupled together and prior to coupling the outer ring 170 to the teeth 146. Thus, in an example, the stator core 143 is not a segmented stator in which individual stator teeth are wound independently from the stator core and before coupling the stator teeth together within the stator core. In some examples, stator cores of the present disclosure may have a segmented design in which the stator teeth are individually wrapped with conductive windings before they are coupled by the frame 184.

Any of a variety of winding techniques and fixtures may be used to form the conductive windings 148. In an example, a method of forming the conductive windings 148 includes utilizing a winding apparatus to wrap insulated conductive wire around a tooth 146. The outward-facing teeth 146 of the teeth 146 and frame 184 assembly can provide an advantage as compared to inside-slotted stator cores in that a higher slot-fill factor can be achieved. The slot fill factor describes the extent to which the conductive windings 148 fill the cross-sectional area of the slots 178, for example, a ratio of the cross-sectional area occupied by the conductive windings 148 to the total cross-sectional area of the slot 178. A higher slot fill ratio indicates a greater amount of winding coils in each slot, which can improve the power density and efficiency of the motor 134.

In an inside-slotted stator core, the geometry of the inward-facing stator slots can be a limiting factor on the slot-fill factor. For example, the fill factor can be limited by the space needed for a portion of a winding apparatus, such as a needle, to fit into the slot. By contrast, the outward-facing slots 178 do not have the same constraint because the winding apparatus can more easily access the outward-facing slots 178, resulting in the ability to achieve a higher slot-fill factor. In an example, due to the outside-slotted structure of the stator teeth 146 during the winding process, which allows the winding process to take place before the outer ring 170 is mounted, a high level of slot fill may be achieved that substantially matches the slot fill level of a segmented stator design without the manufacturing complexity associated with individual windings of a segmented stator structure.

As best seen in FIGS. 1L-1N, in an example, the teeth 146 may be formed from a stack of metal laminations 172. FIG. 1K shows one of the laminations 172, FIG. 1L shows one of the teeth 146 formed from a stack of the metal laminations 172 and FIG. 1M shows a plurality, e.g., six teeth 146, positioned for forming an inner portion of the stator core 143. In other examples, the teeth 146 may be formed from a solid piece of material rather than a stack of laminations. In an example, the metal laminations 172 may generally have an I-beam shape and include an inner body 186 including opposite tooth tips, an outer flange 182, and a web 188 extending therebetween. In an example the laminations 172 may be metal, for example, the laminations 172 may be steel.

In the illustrated example the frame 184 is formed by an injection molding process, such as an overmold process or insert-mold process in which a non-conductive polymer material is formed around the teeth 146. In an example, a method of manufacturing the frame 184 may include positioning the teeth 146 in a circumferential arrangement as shown in FIG. 1N and then performing an injection molding process to form the assembly including the frame 184 and the plurality of stator teeth 146 extending radially outward from the frame 184. In an example the injection-mold material fully envelops the inner bodies 186 of each tooth 146, extends across the sides 190a, 190b, of the web 188 and the inner sides 192a, 192b of the outer flange 182 of each tooth 146. The injection-mold material may also cover a top surface 194a and an opposing bottom surface 194b of the web 188 of each tooth 146 thereby effectively lining the slots 178 and the tops and bottoms of the teeth 146 with an insulating material. Lining the teeth 146 with the insulating injection-mold material eliminates the need for separate insulating members, such as insulating paper, between the conductive windings 148 and the teeth 146. Thus, in an example, the stator assembly 142 includes a plurality of teeth 146 coupled together by an insulating material, e.g., an injection mold material, or an injection molded insulating frame 184 that provides a central structure that supports the teeth 146 and is molded around the surfaces of each tooth 146 to provide insulation between the conductive windings 148 and the teeth 146. In an example, portions of the frame 184 occupy a space between adjacent teeth 146, e.g., a space between the inner bodies 186 of adjacent teeth 146 to form portions of the inner wall 176, or stator bore, of the stator assembly 142. In an example, the frame 184 may be formed from one or more components separate from the teeth 146 and then the frame 184 and the teeth 146 may be assembled or coupled. For example, the frame 184 may be formed by an injection mold process separate from the teeth 146 and then the teeth 146 may be coupled together by the frame 184.

In an example frame 184, e.g. the injection molded insulating frame 184, may also include the bearing housing 162 (see also FIG. 1D) and the terminal support members 164. The injection molded insulating frame 184 may also define one or more airflow openings 196 formed in an end of the frame 184 for directing cooling airflow generated by the fan 152 (FIG. 1D) across the rotor 136 and the airgap between the rotor 136 and the inner wall 176 of the stator assembly 142. In the illustrated example the frame 184 includes three airflow openings 196 located circumferentially between the pairs of terminal support members 164 and located radially between the bearing housing 162 and the inner wall 176 of the stator assembly 142.

The example stator assembly 142 may also include the outer ring 170 coupled to the outer flanges 182 of the stator teeth 146 to provide a path for the magnetic flux generated by the stator windings 148 and to provide structural support for the stator assembly 142. In an example the outer ring 170 may engage the teeth 146, e.g., the outer flange 182 of the teeth 146 to provide structural support in a circumferential and radial direction and secure or lock the teeth 146 in place. In an example, the outer ring 170 may be slid onto the teeth 146-frame 184 assembly after the conductive windings 148 are installed on the teeth 146. In an example the outer ring 170 may include a coupling feature 180 that has a shape that is complementary to a shape of the teeth 146. In an example the coupling feature 180 includes a plurality of longitudinal slots 198 that have a shape that is complementary to a shape of the outer flange 182 of the teeth 146. In an example, a depth of one of the slots 198 is approximately the same as a height, h, of the outer flange 182 of the teeth 146 such that an inner wall of the outer ring 170 is substantially aligned with the inner sides 192a, 192b of the outer flanges 182 of the teeth 146.

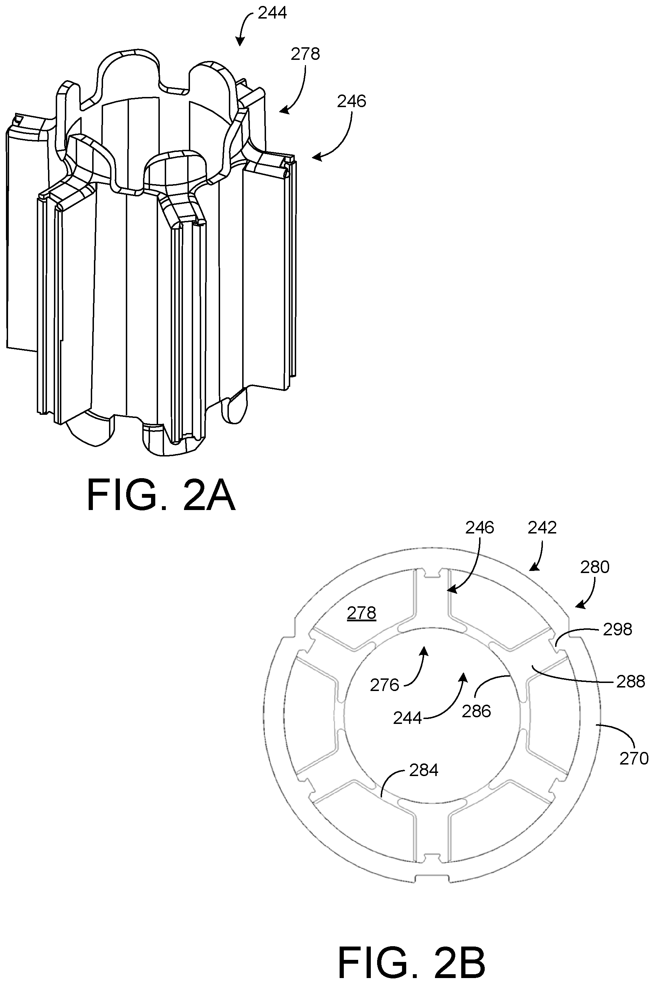

FIGS. 2A and 2B illustrate an example stator assembly 242 of the present disclosure. FIG. 2A is a top perspective view of a frame 284 and teeth 246 of the stator assembly 242 and FIG. 2B is a top cross-sectional view of the stator assembly 242 that includes the frame 284 and the teeth 246 coupled to the frame 284 and an outer ring 270 disposed on the teeth 246. The example stator assembly 242 has a similar construction as the stator assembly 142 (FIG. 1E), including a two-part stator core 244 that includes an outer ring 270 coupled to a plurality of discrete stator teeth 246. The plurality of stator teeth 246 are in turn coupled together by a frame 284. The frame 284 and the teeth 246 form an assembly wherein the teeth 246 extend radially outward from the frame 284.

The example stator assembly 242 may have a generally annular shape and may include an inner wall 276 that defines an inner volume or stator bore in which a rotor may be rotatably disposed. The plurality of teeth 246 may extend radially outward with respect to the inner wall 276. The teeth 246 may be spaced circumferentially around a circumference of the stator assembly 242 and define slots 278 extending between adjacent teeth 246. As with the example stator assembly 142, the stator assembly 242, therefore, includes a stator tooth 246-frame 284 assembly with exterior-facing or radially-outward-facing slots 278 and the stator assembly 242 may be referred to as having an inner portion with an outside-slotted or exterior-slotted stator which may provide the benefit of a higher slot fill as described above in connection with stator assembly 142.

In an example the teeth 246 may be formed from a stack of metal laminations. In other examples, the teeth 246 may be formed from a solid piece of material. In an example, the teeth 246 may generally have a T-shape and include an inner body 286, which may have opposing tooth tips, and a radially-outward-extending web 288. In the illustrated example the frame 284 may be formed by an injection molding process, such as overmold process or insert-mold process in which a non-conductive polymer material forms the frame 284 around the teeth 246. In an example, as shown in FIG. 2B, the injection-mold material of the frame 284 fully envelops the inner bodies 286 and extends across the sides of the web 288 and may provide a layer of insulating material between the teeth 246 and the conductive windings (not illustrated) wrapped around the teeth 246. The injection mold material forming the frame 284 also includes portions extending between adjacent teeth 246 and that define a portion of the inner wall 276 of the stator assembly 242. Thus, in an example, stator assembly 242 includes a plurality of teeth 246 coupled together by an insulating material, e.g., an injection mold material, or an injection molded insulating frame 284 that provides a central structure that supports the teeth 246 and is molded around the surfaces of each tooth 246 to provide insulation between the conductive windings and the teeth 246.

In an example, the outer ring 270 may be slid onto the teeth 246 and frame 284 after conductive windings (not illustrated) are installed on the teeth 246. In an example the outer ring 270 may include a coupling feature 280 that has a shape that is complementary to a shape of the teeth 246. In an example the coupling feature 280 includes a plurality of longitudinal protrusions 298 on an inner surface of the outer ring 270 that have a shape that is complementary to a shape of an outer surface of the teeth 246. For example, the plurality of longitudinal protrusions 298 have a shape that is complementary to, or configured to couple to, for example, slidably couple to, a recess in an outer surface of the radially-extending webs 288 of a corresponding one of the teeth 246.

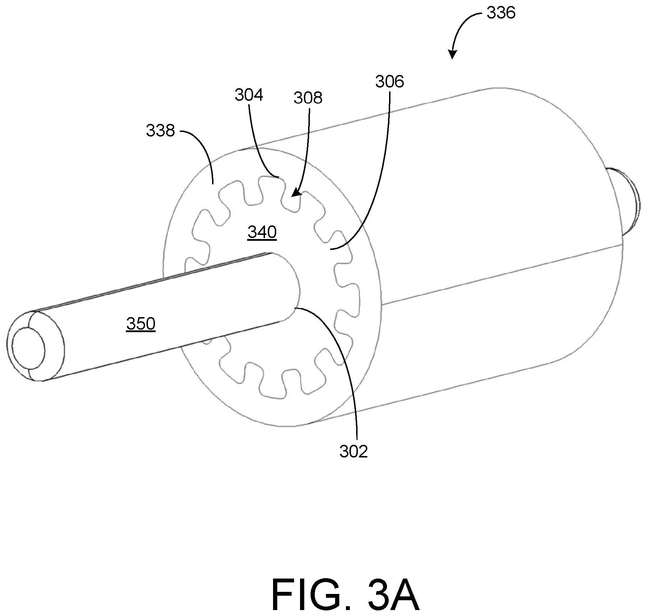

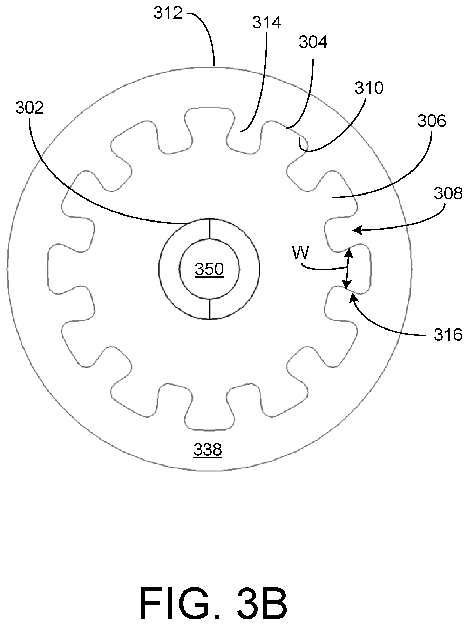

FIG. 3A is a perspective view of a rotor 336 of the present disclosure which may be utilized in an inner-rotor motor, such as motor 134 (FIG. 1A) and may be utilized with any of a variety of stator assemblies configured for inner-rotors, such as stator assembly 142 (FIG. 1E-1G) or stator assembly 242 (FIG. 2A, 2B). FIG. 3B is an end view of the rotor 336.

Referring to FIGS. 3A and 3B, in an example, the rotor 336 includes a rotor core 340 coupled to a rotor shaft 350 and a magnetic layer or magnet layer 338 formed on an outer surface of the rotor core 340. The rotor core 340 may be formed from a solid piece of material, such as metal, or may be formed from a stack of laminations. In an example the rotor core 340 includes an inner surface 302 that is coupled to the rotor shaft 350 and an outer surface 304 that is coupled to the magnet layer 338. The outer surface 304 is non-cylindrical, including piloting and retention features that circumferentially fix the magnet layer 338. In an example the rotor core 340 includes a plurality of radially-outward-extending teeth 306 that are spaced circumferentially around a circumference of the rotor core 340 and form slots 308 between adjacent teeth 306.

The magnet layer 338 may include an inner surface 310 that may have a similar and complementary shape as the outer surface 304 of the rotor core 340 that is coupled to the outer surface 304 of the rotor core 340. The magnet layer 338 may have an outer surface 312 that is substantially cylindrical and faces an inner wall of a stator assembly. In an example, the rotor 336 does not have an outer outer ring and the outer surface 312 of the magnet layer 338 is exposed and in direct contact with the airgap between the rotor 336 and the stator. Having exposed magnets 338 can be beneficial for minimizing an airgap between the rotor 336 and a stator which can increase an efficiency and power of the motor.

The inner surface 310 of the magnet layer 338 may have a plurality of radially-inward-extending teeth 314 that have a complementary shape to the slots 308 of the rotor core 340. The teeth 306 of the rotor core 340 and the teeth 314 of the magnet layer 338 form an interlocking interface that couples the magnet layer 338 to the rotor core 340. In an example, the teeth 306 of the rotor core 340 have a radial or centrifugal coupling feature that secures the magnet layer 338 to the rotor core 340 in a radial direction. For example, the teeth 306 may have an undercut or have an undercut cross-sectional shape, where a width, w, of the teeth 306 increases as a function of, or with, a radial distance from a rotational axis of the rotor 336. In an example the radial or centrifugal coupling feature may include a side wall 316 of the teeth 306 that is transverse to a radial plane that extends through and is parallel to a rotational axis of the rotor 336. In an example the rotor 336 does not include any glue or adhesive between the magnet layer 338 and the rotor core 340 and the interlocking coupling of the teeth 306 and slots 308 of the rotor core 340 with the teeth 314 of the magnet layer 338 is sufficient for securing the magnet layer 338 to the rotor core 340.

In an example the magnet layer 338 may be an injection-molded magnet layer that may be formed by an injection molding process. In an example the magnet layer 338 may be made of sintered, hot-extrusion (e.g., MQ3), bonded, and/or injection-molded magnetic material. In an example, the magnet layer 338 may include a sintered magnet including a magnet alloy that is pulverized, magnetically aligned within a magnetic field for magnetization, press molded, and then sintered. In an example the magnet layer 338 may include a series of discrete permanent magnets mounted on the rotor core 340, for example, as a unit, which may be bonded together before or after magnetization.

In an example, a method of manufacturing the rotor 336 may include applying an injection molding material to the outer surface 304 of the rotor core 340 to form the magnet layer 338. The injection molding material may include a solid binder, such as a plastic or thermosetting epoxy with magnetic particles dispersed in the binder material. In an example, after the magnet layer 338 is formed, the rotor 336 may be magnetized in a magnetizing fixture to create a desired arrangement of magnetic poles around a circumference of the rotor 336. In an example, the magnet layer 338 may be magnetized to form a four-pole rotor with a N-S-N-S configuration. The rotor core 340 may then be mounted, e.g., via a press-fitting process, on the rotor shaft 350.

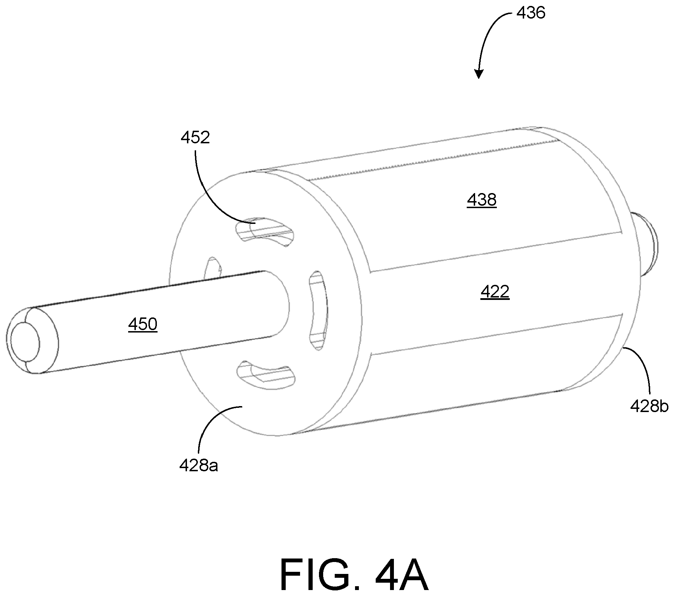

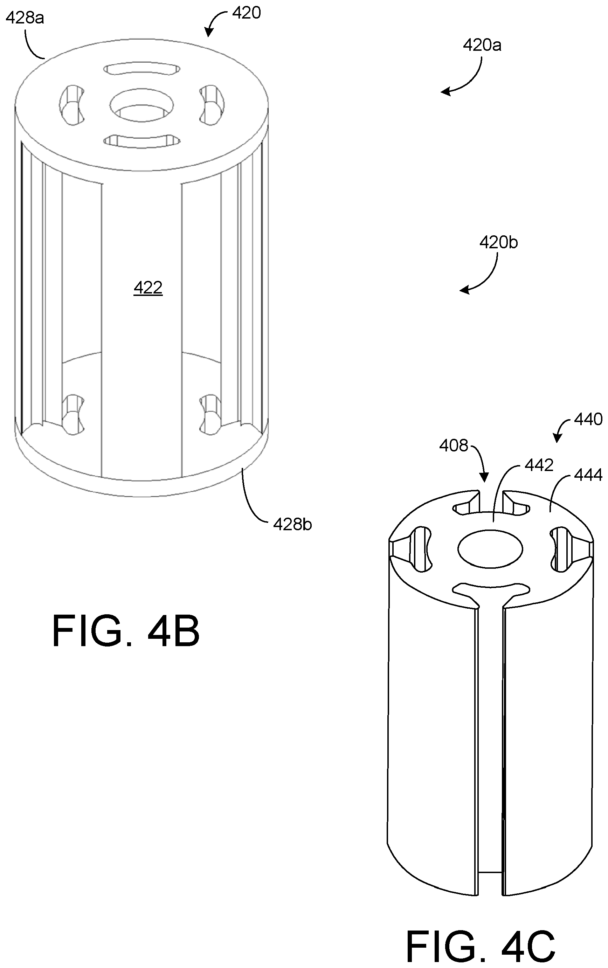

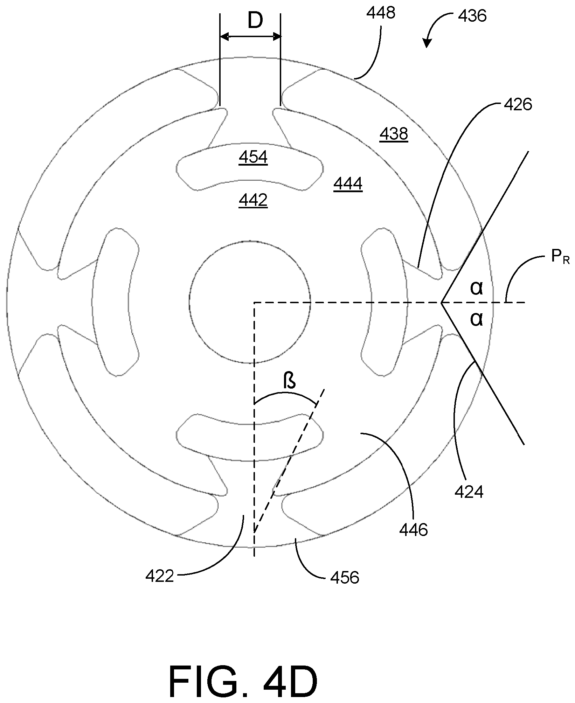

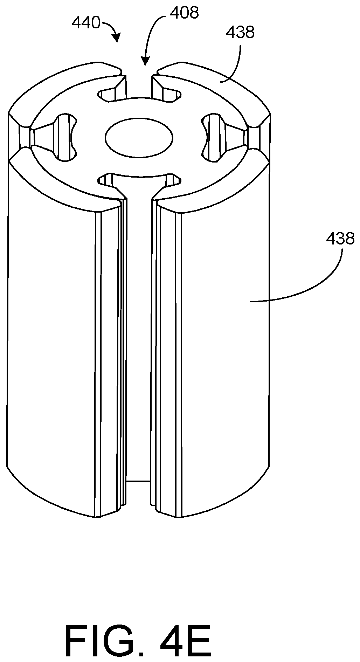

FIG. 4A is a perspective view of a rotor 436, for example, a permanent magnet rotor, of the present disclosure which may be utilized in an inner-rotor motor, such as motor 134 (FIG. 1A). The example rotor 436 may be utilized with any of a variety of stator assemblies configured for inner-rotors, such as the stator assembly 142 (FIG. 1E-1G) or the stator assembly 242 (FIG. 2A, 2B). FIG. 4B is a perspective view of a magnet retainer 420 of the rotor 436. FIG. 4C is a perspective view of a rotor core 440 of the rotor 436. FIG. 4D is a cross-sectional end view of the rotor 436 and FIG. 4E is a perspective view of a plurality of magnets 438, e.g., surface-mounted magnets, disposed on the rotor core 440.

Referring to FIGS. 4A-4E, in an example, the rotor 436 includes the rotor core 440 coupled to a rotor shaft 450 and the plurality of magnets 438 disposed on an outer surface of the rotor core 440. The rotor core 440 includes an annular portion 442 and a plurality of flanges 444 spaced radially from the annular portion 442 and spaced circumferentially around the annular portion 442. The example rotor core 440 also includes a plurality of radially extending webs 446 extending between the annular portion 442 and a corresponding flange 444. The rotor core 440 may be formed from a conductive or non-conductive material and may be a solid piece of material or a stack of laminations.

In an example, the magnets 438 are surface-mounted magnets and are disposed on an outer surface of the rotor core 440, and in an example are positioned on corresponding ones of the plurality of flanges 444. The magnets 438 may each be a solid piece of material or may be a stacked array of multiple magnets. The magnets 438 and the plurality of flanges 444 are positioned so as to form slots 408 that extend between adjacent flanges 444 and adjacent magnets 438.

The rotor 436 may also include the magnet retainer 420 for securing the magnets 438 to the rotor core 440. In an example the magnet retainer 420 includes a plurality of axially-extending keys 422 that are positioned in the slots 408 for locking or coupling the magnets 438 to the rotor core 440. The keys 422 may have a cross-sectional shape that is complementary to a cross-sectional shape of the slots 408. The plurality of axially-extending keys 422 are configured to couple to sidewalls 424 of the magnets 438 and in an example the keys 422 do not extend across an outer surface 448 of the magnets 438. The outer surfaces 448 of the magnets 438 can, therefore, remain exposed. For example, the rotor 436 may not include an outer layer such as an outer retention ring that covers the magnets 438 and the outer surfaces 448 can be in direct contact with the airgap between the rotor 436 and a stator. Having exposed magnets 438 can be beneficial for minimizing an airgap between the rotor 436 and a stator which can increase an efficiency and power of the motor. In an example the rotor 436 does not include any glue or adhesive between the magnets 438 and the rotor core 440 and the magnet retainer 420 is sufficient for securing the magnets 438 to the rotor core 440.

As shown in FIG. 4D, the keys 422 may have outer surfaces 456 that are configured, shaped, and dimensioned to form a substantially continuous outer surface with the outer surfaces 448 of the magnets 438 so that the keys 422 and magnets 438 together form a substantially continuous cylindrical surface. Forming a continuous surface can be beneficial, for example, to minimize acoustic vibrations caused by pressure variations in an airflow in the airgap between an outer surface of the rotor 436 and the inner surface of a stator.

As best shown in FIG. 4D, in an example, the magnets 438 and/or the plurality of flanges 444 and/or the plurality of axially-extending keys 422 may have a radial or centrifugal coupling feature for securing the magnets 438 to the rotor core 440 in a radial direction and that prevents relative radial movement between the magnets 438 and the rotor core 440. In an example the radial or centrifugal coupling feature may include angled sidewalls 424 on the magnets 438 and/or angled sidewalls 426 on the plurality of flanges 444. In an example, the sidewalls 424 may extend at an angle, α, with respect to a radial plane, PR, that intersects and is parallel to a rotational axis of the rotor 436. In an example, the angle, α, may be greater than approximately 20°. In an example, the angle, α, may be between approximately 20° and approximately 80°. In an example, the sidewalls 426 of the plurality of flanges 444 may extend at an angle, β, with respect to the radial plane, PR. In an example, the angle, β, may be greater than approximately 20°. In an example, the angle, β, may be between approximately 20° and approximately 80°. In an example, a minimum spacing, D, of the slots 408 and a corresponding minimum width of the keys 422 may be between approximately 5% and approximately 20% of an outer diameter of the rotor 436.

In some examples, the magnet retainer 420 may also include a first end plate 428a and a second end plate 428b. The plurality of axially-extending keys 422 may extend between the first end plate 428a and a second end plate 428b. The first end plate 428a and the second end plate 428b may be configured to secure the magnets 438 in an axial direction and maintain axial alignment of the magnets 438 and the rotor core 440. In an example, the magnet retainer 420 may not include the first end plate 428a and the second end plate 428b and may only include the plurality of axially-extending keys 422 positioned in the slots 408.

In an example, one or more of the plurality of axially-extending keys 422 may each have a length that is approximately the same as an axial length of the rotor 436. In an example, one or more of the plurality of axially-extending keys 422 may include two or more segments positioned along a length of a given slot 408. FIG. 4B shows one example of the magnet retainer 420 in which the magnet retainer 420 is a unitary member which may be formed around the rotor core 440 and magnets 438, for example, in an overmold process or insert-mold process. In another example the magnet retainer 420 may include two or more portions, such as a first part and a second part that may be coupled, such as slid onto the rotor core 440 and the magnets 438.

The rotor 436 may include airflow openings 452 that extend in an axial direction along a length of the rotor 436. In an example, the airflow openings 452 are defined by openings in the first end plate 428a and the second end plate 428b and by inner volumes 454 in the rotor core 440. In an example the inner volumes 454 extend between an inner side of corresponding ones of the keys 422 and the rotor core 440. For example, the inner volumes 454 may extend between a corresponding key 422 and an outer surface of the annular portion 442 of the rotor core 440 and extend between adjacent webs 446. In an example, the plurality of keys 422 may be formed during an injection molding process and the injection molding material may be injected into the slots 408 but may not fill an entire volume of the slots 408 to thereby maintain the inner volumes 454 to define air cooling passages through an axial length of the rotor 436. The foregoing description has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. Additional and/or alternative steps may be employed. When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "lower," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. A motor, comprising:
a stator that includes:
an outer ring;
a plurality of stator teeth discretely formed from the outer ring and coupled to an inner surface thereof and extending in a radially inward direction;
a plurality of conductive windings disposed on the plurality of stator teeth; and
a frame coupled with inner portions of the plurality of stator teeth to form an inner wall that defines an inner volume configured for a rotor to be disposed therein.

2. The motor of claim 1, wherein the frame extends between the inner portions of adjacent ones of the plurality of stator teeth.

3. The motor of claim 1 or claim 2, wherein the frame is an injection molded frame that provides a central structure that supports the plurality of stator teeth and defines a portion of the inner wall.

4. The motor of any preceding claim, wherein the frame is molded around at least a portion of one or more of the plurality of stator teeth to provide insulation between at least one of the plurality of conductive windings and a corresponding one of the plurality of stator teeth.

5. The motor of any preceding claim, wherein the frame includes a bearing housing for supporting a bearing for a rotor shaft.

6. The motor of any preceding claim, wherein the frame includes terminal support members for supporting a terminal, at least one of the plurality of conductive windings electrically connected to the terminal, preferably wherein the frame includes airflow openings adjacent the terminal support members for passage of cooling air flow into the inner volume.

7. The motor of any preceding claim, wherein the outer ring includes a plurality of coupling features that have a shape that is complementary to a shape of an outer portion of corresponding ones of the plurality of stator teeth, wherein the plurality of stator teeth are slideably mounted within the outer ring in engagement with corresponding ones of the plurality of coupling features and fixed rotationally and radially therein by the plurality of coupling features, preferably wherein at least one of the plurality of coupling features is at least one of a recess or a protrusion on an inner surface of the outer ring.

8. The motor of any preceding claim, further comprising a rotor that includes:
a rotor core that includes an outer surface that includes a first tooth and a second tooth, the first tooth and the second tooth spaced circumferentially and defining a slot therebetween; and
an injection-molded magnet layer formed on the rotor core and injected into the slot to form a magnet tooth that interlocks with the first tooth and the second tooth.

9. The motor of claim 8, wherein the first tooth includes a radial coupling feature that secures the magnet layer to the rotor core in a radial direction, preferably wherein the radial coupling feature includes an undercut cross-sectional shape of the first tooth.

10. The motor of claim 8 or claim 9, wherein the injection-molded magnet layer is magnetized after forming the injection-molded magnet layer on the rotor core.

11. A rotor, comprising:
a rotor core that includes a first flange and a second flange spaced to form a slot therebetween;
a first surface mounted magnet disposed on the first flange and a second surface mounted magnet disposed on the second flange; and
a key positioned in the slot that secures the first magnet and the second magnet to the rotor core.

12. The rotor of claim 11, wherein the key is formed by injecting an injection molding material into the slot.

13. The rotor of claim 11 or claim 12, further comprising an end plate positioned on an axial end of the rotor for securing the first magnet and the second magnet to the rotor core in an axial direction, wherein the key is coupled to and extends from the end plate.

14. The rotor of any one of claims 11 to 13, wherein:
the rotor core includes an inner annular portion;
the first flange and the second flange are spaced radially from the inner annular portion; and
the rotor includes an airflow passage that extends along a length of the rotor and is defined at least in part by an outer surface of the inner annular portion and the key.

15. A method of manufacturing a stator, comprising:
injecting an injection molding material to form a frame on inner bodies of a plurality of stator teeth, wherein the frame cooperates with the inner bodies of the plurality of stator teeth to form an inner wall defining an inner volume that is configured for a rotor to be disposed therein;
winding a plurality of conductive windings on corresponding ones of the plurality of stator teeth after injecting the injection molding material; and
mounting an outer ring in engagement with outer bodies of the plurality of stator teeth.

16. The method of claim 15, wherein injecting the injection molding material includes forming a bearing housing for supporting a bearing of a rotor shaft therein.

17. The method of claim 15 or claim 16, wherein injecting the injection molding material includes applying injection molding material at least partially to at least one of the plurality of stator teeth to provide electrical insulation between the plurality of conductive windings and corresponding respective ones of the plurality of stator teeth.
